(19) Europäisches Patentamt
European Patent Office
Office européen des brevets

(11) **EP 0 857 386 B1**

(12) **FASCICULE DE BREVET EUROPEEN**

(45) Date de publication et mention
de la délivrance du brevet:
**29.06.2005 Bulletin 2005/26**

(51) Int Cl.⁷: **H04L 27/00**, H04B 14/02,
H04B 3/23

(21) Numéro de dépôt: **96934959.6**

(22) Date de dépôt: **23.10.1996**

(86) Numéro de dépôt international:
**PCT/FR1996/001657**

(87) Numéro de publication internationale:
**WO 1997/016009 (01.05.1997 Gazette 1997/19)**

(54) **DISPOSITIF ET PROCEDE DE COMMUNICATION NUMERIQUE-ANALOGIQUE**

VORRICHTUNG UND VERFAHREN ZUR DIGITALEN/ANALOGEN
NACHRICHTENÜBERTRAGUNG

DIGITAL-TO-ANALOG COMMUNICATION DEVICE AND METHOD

(84) Etats contractants désignés:
**AT BE CH DE DK ES FI FR GB GR IE IT LI LU MC
NL PT SE**
Etats d'extension désignés:
**LT LV**

(30) Priorité: **23.10.1995 FR 9512672**

(43) Date de publication de la demande:
**12.08.1998 Bulletin 1998/33**

(73) Titulaire: **MOTOROLA INC.**
**Schaumburg, IL 60196-3750 (US)**

(72) Inventeur: **HUMBLET, Pierre**
**F-06400 Cannes (FR)**

(74) Mandataire: **Openshaw, Paul Malcolm et al**
**Openshaw & Co.**
**Town Hall Exchange**
**The Town Hall Buildings**
**Castle Street**
**Farnham, Surrey GU9 7ND (GB)**

(56) Documents cités:
EP-A- 0 265 272     EP-A- 0 669 740
WO-A-95/17049       WO-A-96/18261
DE-C- 3 416 818     GB-A- 2 201 567

- PROCEEDINGS OF THE INTERNATIONAL
  CONFERENCE ON COMMUNICATIONS (ICC),
  GENEVA, MAY 23 - 26, 1993, vol. 1 - 2 - 03, 23 Mai
  1993, INSTITUTE OF ELECTRICAL AND
  ELECTRONICS ENGINEERS, pages 507-511,
  XP000371143 KALET I ET AL: "THE CAPACITY
  OF PCM VOICEBAND CHANNELS"
- ELECTRICAL COMMUNICATION, vol. 46, no. 1,
  1971, BRUSSELS BE, pages 24-31, XP002026767
  SHARPE: "techniques for high-speed data
  transmission over Voice Channels"
- IEEE TRANSACTIONS ON COMMUNICATIONS,
  vol. 38, no. 1, 1 Janvier 1990, pages 31-38,
  XP000102578 LIN D W: "MINIMUM
  MEAN-SQUARED ERROR ECHO
  CANCELLATION AND EQUALIZATION FOR
  DIGITAL SUBSCRIBER LINE TRANSMISSION:
  PART I - THEORY AND COMPUTATION"
- INTERNATIONAL JOURNAL OF ELECTRONICS,
  JUNE 1982, UK, vol. 52, no. 6, ISSN 0020-7217,
  pages 507-523, XP002026760 BESSLICH PH W:
  "Signals for digital transmission"

**Description**

La présente invention concerne un dispositif de communication hybride numérique-analogique, sur un canal téléphonique, et un procédé de transmission apte à être mis en oeuvre par un tel dispositif.

La croissance du parc d'ordinateurs personnels installés et l'éclosion de nouveaux services télématiques témoignent du potentiel de croissance du volume des communications en ligne. Alors que la situation actuelle est satisfaisante pour les gros utilisateurs qui sont à même de connecter leurs réseaux internes à des services extérieurs par l'intermédiaire de réseaux de transmission à haut débit ou de lignes louées, le coût de telles solutions est trop élevé pour de petites entreprises ou des particuliers.

Il apparaît certain que cette situation va évoluer, et que la nécessité de distribuer des services impliquant un débit de transmission élevé jusque vers les résidences des particuliers, sera à l'origine d'un réseau à large bande généralisé. Mais un tel réseau a peu de chances d'être déployé de façon universelle avant plusieurs années, voire dizaines d'années.

En attendant la disponibilité dans la plupart des pays d'un tel réseau à haut débit, les particuliers, les écoles, les petites entreprises doivent se résoudre à transmettre des données sur le réseau téléphonique. Pour cela, ils ont le choix entre deux technologies connues. La solution la plus répandue consiste à utiliser des modems fonctionnant à un débit de 14,4 Kb/s ou 28,8 Kb/s. Une solution plus onéreuse consiste à utiliser le réseau RNIS, qui possède deux canaux de données à 64 Kb/s et un canal de signalisation à 16 Kb/s. Cependant cette deuxième solution n'est pas disponible partout, et nécessite un investissement important pour les utilisateurs sous la forme de tarifs d'abonnement plus élevés et de matériel de communication adapté.

On connaît de par le EP-A-0 669 740 de AT&T Corp. un modem destiné à être utilisé avec des lignes d'abonné analogiques aux deux extrémités du chemin de transmission. Ce modem comporte des moyens pour égaliser séparément chaque boucle d'une connexion par réseau téléphonique analogique, en utilisant une pluralité de filtres de transmission et une pluralité de filtres de réception. Les filtres sont utilisés de telle manière que, dans la direction de transmission du modem vers le central, les échantillons de tension envoyés par les stations de codage/décodage sont équivalents aux niveaux de quantification de la centrale.

La nécessité d'utiliser des niveaux imposés pour la loi de quantification empêche de choisir les niveaux qui donnent la meilleure résistance au bruit en présence d'un signal d'écho.

En outre, le document précité ne décrit pas un dispositif de communication entre un adaptateur numérique et un adaptateur analogique, dans lequel l'adaptateur numérique serait relié à un central par l'intermédiaire d'une interface numérique.

On connaît d'après l'article Proceedings of the International Conference on Communications (ICC), Geneva, May 23-26, 1993, vol. 1-2 - 03, 23 May 1993, Institute of Electrical and Electronics Engineers, pages 507-511, XP000371143; Kalet I et al., qu'il est possible, avec des terminaisons analogiques, de transmettre des donnée bout-à-bout à des taux plus élevés que ceux permis par des liaisons analogiques classiques. A cette fin, les signaux transmis sont réalisés avec une simple mise en forme, mais le récepteur nécessite un détecteur de Viterbi avec un nombre d'états important.

Par ailleurs, une analyse théorique de l'optimisation de performances est présenté dans l'article IEEE Transactions on Communications, vol. 38, No. 1,1 Janvier 1990, pages 31-38, XP000102578; Lin D.W. Cette analyse porte notamment sur les structures émetteur-récepteur qui incorporent des dispositifs de suppression d'écho et d'égalisateurs.

L'invention a pour but de proposer une nouvelle alternative, qui soit en mesure d'utiliser les avantages d'un réseau comme par exemple le réseau RNIS, et notamment une vitesse de transmission plus élevée, de l'ordre de 64 Kb/s, tout en n'entraînant pas de surcoût notable pour les utilisateurs par rapport au coût des solutions classiques fonctionnant à 14,4 Kb/s.

A cet effet, l'invention concerne selon la revendication 1, un dispositif de communication entre un adaptateur numérique relié à un central par l'intermédiaire d'une interface numérique, notamment de type RNIS, et un adaptateur analogique relié à un central par l'intermédiaire d'une interface analogique, lesdits centraux étant reliés par l'intermédiaire d'un réseau de télécommunications, caractérisé en ce qu'il comporte des moyens de liaison directe entre l'adaptateur numérique et l'adaptateur analogique, l'information numérique de l'adaptateur numérique étant envoyée à l'adaptateur analogique directement sous forme numérique sans émuler un signal analogique, et l'information analogique de l'adaptateur analogique étant envoyée à l'adaptateur numérique sous forme analogique;
et en ce que

-    lesdits moyens de liaison directe comportent, dans le sens de transmission allant de l'adaptateur analogique vers l'adaptateur numérique, un transmetteur analogique situé dans l'adaptateur analogique et apte à transmettre à un récepteur numérique situé dans l'adaptateur numérique, un signal analogique tel que lors de son échantillonnage par l'interface analogique du central, vaudra la somme d'une valeur apte à être déterminée par l'information numérique transmise par l'adaptateur analogique à l'adaptateur numérique, et de l'écho du signal émis par l'adaptateur numérique, sans que ladite valeur doive être égale à un niveau de la loi de quantification.

L'invention concerne également, selon la revendication 10, un procédé de transmission d'un adaptateur analogique vers un adaptateur numérique dans un système de communication, est caractérisé en ce qu'il comporte les étapes consistant à:

- prendre un groupe de bits provenant d'une source de données connectée au système de communication;
- sélectionner un signal analogique ayant une amplitude correspondant à la valeur numérique du groupe de bits, les signaux correspondant à des groupes successifs interférant les uns avec les autres et ayant une forme telle qu'au moment où le signal analogique est échantillonné dans l'interface analogique de la centrale, sa valeur soit sensiblement égale à la somme d'une valeur apte à être déterminée par l'information numérique transmise par l'adaptateur analogique à l'adaptateur numérique , et de l'écho du signal émis par l'adaptateur numérique, sans que ladite valeur doive être égale à un niveau de la loi de quantification, de sorte que suite à l'échantillonnage du signal analogique, un octet apparaisse dans l'adaptateur numérique, représentant ladite somme;
- traiter les octets successifs pour retrouver la séquence la plus vraisemblable des groupes de bits, étant donné l'écho du signal transmis par l'adaptateur numérique;
- transmettre la valeur numérique des groupes de bits retrouvés à l'équipement de l'utilisateur.

L'invention sera mieux comprise à la lecture de la description suivante faite à titre d'exemple non limitatif, et aux dessins ci-annexés, dans lesquels:

- la figure 1 représente un schéma de principe du dispositif de communication mettant en oeuvre l'invention;
- la figure 2 représente un graphe du débit de transmission maximal pour une loi de quantification de type A, en fonction de la distance minimale entre les n niveaux choisis de quantification;
- la figure 3 représente un schéma de principe d'un adaptateur numérique adapté au dispositif selon l'invention;
- la figure 4 représente un schéma de principe d'un adaptateur analogique adapté au dispositif selon l'invention;

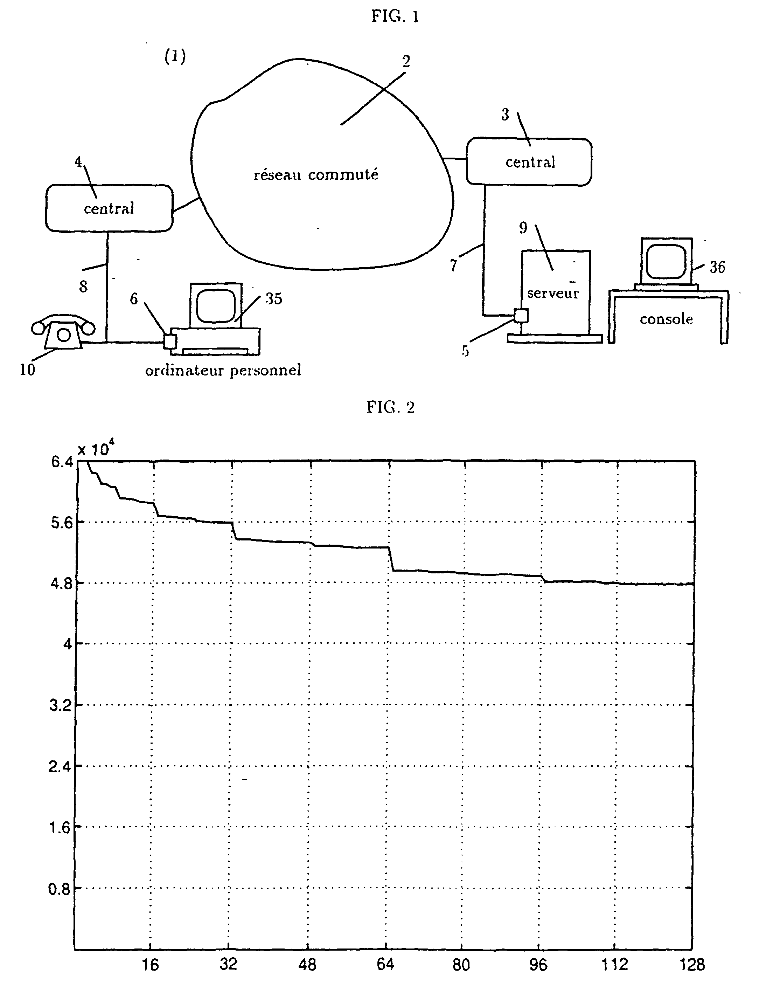

On se réfère à la figure 1. On a représenté dans cette figure l'architecture générale d'un dispositif de communication 1 utilisant un réseau commuté public 2 pour les transmissions entre deux centraux 3,4 reliés respectivement, d'un premier côté, à un adaptateur numérique 5 par une interface numérique 7, et de l'autre côté, à un adaptateur 6 dit analogique, c'est-à-dire connecté par une simple interface téléphonique classique 8.

Un serveur numérique 9, qui est par exemple un serveur hébergeant des applications à haut débit, est connecté au central numérique 3 par une ligne 7 et un adaptateur numérique 5 du serveur 9.

Le terminal 35 est notamment sous la forme d'un ordinateur personnel connecté à l'adaptateur analogique 6. L'adaptateur et un téléphone 10 sont connectés par la simple ligne téléphonique 8 au central 4. Sur la ligne analogique 8 transitent donc des informations analogiques: la voix de l'utilisateur du téléphone 10, ou des informations numériques issues de ou dirigées vers l'adaptateur analogique 6.

Grâce à cette architecture, qui est connue dans le cas où l'adaptateur analogique est un modem classique, il est possible d'appeler une ligne analogique classique 8 à partir d'un serveur 9, et réciproquement. Cette possibilité est déjà utilisée pour transmettre de la parole ou des données. Quand le signal numérique en provenance d'un adaptateur numérique 5 arrive, après son transport par le réseau 2, jusqu'au central téléphonique 4, les octets du signal numérique sont transformés, par un convertisseur numérique/analogique intégré au central 4, en des niveaux de tension, et ceci avec une fréquence d'échantillonnage qui est normalement de 8000 fois par seconde. Cette conversion numérique/ analogique (N/A) a lieu suivant une loi de conversion, par exemple la loi "A" en Europe, ou la loi « μ » dans d'autres parties du monde. Dans l'autre direction, c'est-à-dire dans le sens de l'adaptateur analogique 6 vers l'adaptateur numérique 5, la tension analogique reçue par le central 4 est numérisée par un échantillonneur et représentée par des octets. Ces octets, après transport par le réseau 2, sont transmis à l'adaptateur numérique 5.

Globalement, une connexion telle que celle décrite ci-dessus permet à un adaptateur numérique 5 de communiquer avec un adaptateur analogique 6. Traditionnellement, l'adaptateur numérique 5 envoie une séquence d'octets qui, après une transformation utilisant une loi précitée, correspondent à un signal de parole, ou à un signal de modem classique. Ce signal est alors traité normalement, dans le cas de la téléphonie, il est directement transmis à l'écouteur du combiné téléphonique 10. De façon similaire, l'adaptateur analogique 6 est traditionnellement constitué par un modem. Les opérations inverses sont effectuées dans l'autre direction de transmission.

L'invention propose une autre méthode de transmission entre un adaptateur analogique 6 et un adaptateur numérique 5, et un dispositif correspondant.

Le principe de l'invention est expliqué en liaison avec la figure 2, qui représente le compromis qui existe entre la vitesse de transmission (en kilobits/seconde sur l'échelle des ordonnées) et la résistance au bruit. Si l'on souhaite transmettre à 64 Kb/s, tous les 256 niveaux de quantification possibles à partir de huit bits ($2^8 = 256$) doivent être utilisés. Cependant, pour une transmission soumise à un bruit Gaussien, la probabilité d'erreur au cours de la transmission dépend de la distance minimale $d_{min}$ (en abscisse de la figure 2) entre deux niveaux adjacents de l'échelle de quantification, et cette relation est représentée dans la figure 2, pour une loi de conversion de type A. On constate de façon surprenante qu'en augmentant la distance minimale $d_{min}$ entre niveaux de 2 à 4, on ne perd pas la moitié des niveaux de quantification, mais seulement 33 niveaux sur 256. Il en résulte de façon similaire qu'une transmission à environ 48 Kb/s reste possible en n'utilisant que 64 niveaux de quantification séparés d'une distance de $d_{min}$ = 128.

Les étapes du procédé de transmission dans les deux sens sont alors les suivantes, quand le signal analogique est quantifié par rapport à n = 64 niveaux, permettant un débit de 48 Kb/s.

Pour le procédé de transmission d'un adaptateur numérique vers un adaptateur analogique, les étapes du procédé comprennent les étapes suivantes:

- prendre un groupe de bits provenant d'une source de données numériques, par exemple un groupe de 6 bits;
- choisir un parmi n (notamment n= 64) niveaux présélectionnés parmi N (notamment N = 256) niveaux de tension, chaque niveau étant représenté sous forme numérique par un octet transmis 8000 fois par seconde;
- envoyer successivement les octets correspondant à la sélection de n niveaux à travers le réseau numérique vers un adaptateur analogique, de façon à produire dans l'adaptateur analogique des signaux dont l'amplitude est sensiblement égale aux niveaux représentés par chaque octet, les signaux correspondant à des octets successifs interférant les uns avec les autres pour produire dans l'adaptateur analogique un signal analogique résultant;
- égaliser ledit signal analogique résultant de façon à éliminer les interférences;
- mesurer l'amplitude du signal analogique résultant et en déduire la valeur numérique de l'octet;
- à partir de la valeur numérique de l'octet, reconstituer le groupe de bits et l'envoyer à un récepteur de données numériques.

Le procédé de transmission d'un adaptateur analogique vers un adaptateur numérique dans un système de communication, comporte les étapes consistant à:

- prendre 8000 fois par seconde un groupe de bits provenant d'une source de données connectée au système de communication;
- sélectionner un signal analogique ayant une amplitude correspondant à la valeur numérique du groupe de bits, les signaux correspondant à des groupes successifs interférant les uns avec les autres et ayant une forme telle qu'au moment où le signal analogique est échantillonné dans l'interface analogique (8) de la centrale (4), sa valeur soit sensiblement égale à la somme d'une valeur apte à être déterminée par l'information numérique transmise par l'adaptateur analogique (6) à l'adaptateur numérique (5), et de l'écho du signal émis par l'adaptateur numérique(5), sans que ladite valeur doive être égale à un niveau de la loi de quantification, de sorte que suite à l'échantillonnage du signal analogique, un octet apparaisse dans l'adaptateur numérique (5), représentant ladite somme;

- traiter les octets successifs pour retrouver la séquence la plus vraisemblable des groupes de bits, étant donné l'écho du signal transmis par l'adaptateur numérique;
- transmettre la valeur numérique des groupes de bits retrouvés à l'équipement de l'utilisateur.

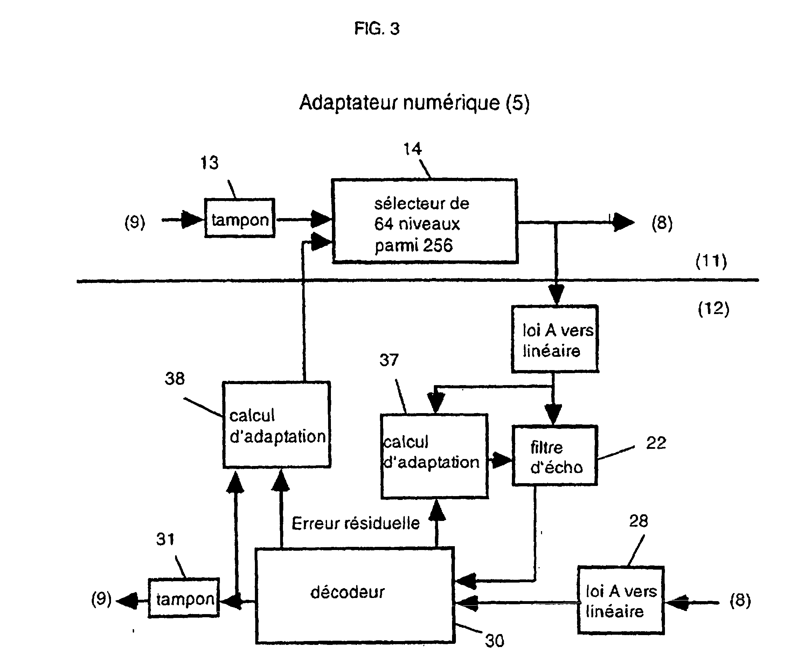

En somme, le procédé de transmission n'essaye pas de reconstruire un signal analogique pour la transmission sur la ligne vers l'adaptateur analogique. Au contraire, les octets qui représentent l'information numérique sont directement transformés en niveaux de tension, comme illustré par le dispositif correspondant dans la partie supérieure de la figure 3, qui concerne la partie transmission de l'adaptateur numérique 5. Par exemple, pour communiquer à 48 kb/s, l'adaptateur numérique 5 transforme les bits reçus de l'utilisateur en groupes de 6 bits représentatifs de niveaux de tension (soit $2^6$ = 64 possibilités), envoyés 8000 fois par seconde, et représentant l'un parmi les 256 niveaux de la loi de conversion. Les 64 niveaux ainsi utilisés dans cet exemple sont choisis de manière à être séparés les uns des autres autant que possible pour fournir une meilleure résistance au bruit. Cette séparation est appelée la distance minimale $d_{min}$ dans la suite. L'intérêt de cette approche est d'éliminer le bruit de quantification introduit par la loi de conversion.

Il est à noter que l'on peut également envisager de façon connue en soi, d'utiliser de la modulation codée en treillis pour obtenir une meilleure résistance au bruit.

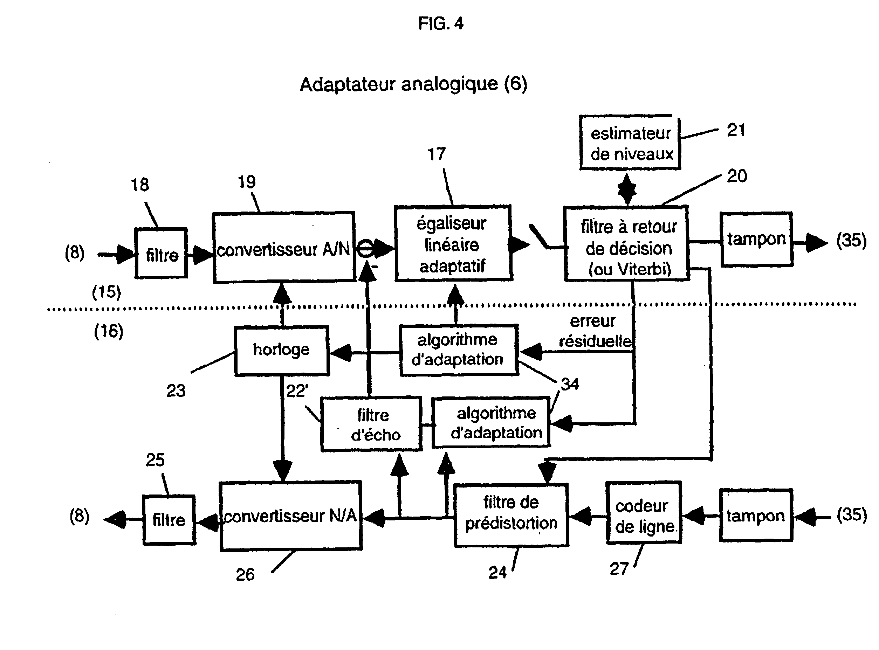

Pour l'interfaçage avec l'interface 7, l'adaptateur numérique 5 comporte principalement une partie supérieure (au-dessus du trait interrompu horizontal) constituée par un transmetteur numérique 11, et une partie inférieure 12 constituée par un récepteur numérique. L'entrée du transmetteur numérique 11 est alimentée par une source de données numériques, comme par le serveur 9 (figure 1). L'entrée du transmetteur numérique 11 qui voit passer des octets représentant l'information numérique issue du serveur 9, est reliée, à travers un tampon 13 si une adaptation de débit est nécessaire, à l'entrée d'un sélecteur de niveaux 14, dont la sortie constitue la sortie du transmetteur numérique 11 de l'adaptateur numérique 5. Cette sortie du transmetteur numérique 11 de l'adaptateur numérique 5 est connectée, à travers le réseau 2, à l'entrée de la partie réception de l'adaptateur analogique 6, qui est représentée en partie supérieure 15 de la figure 4, la partie transmission de l'adaptateur analogique 6 étant représentée par la partie inférieure 16 de la figure 4.

Le récepteur 15 de l'adaptateur analogique 6 reçoit en entrée (au haut de la figure 4), une série d'impulsions analogiques dont les niveaux de tension représentent l'information transmise par l'adaptateur numérique de la figure 3. La présence de filtres dans la centrale téléphonique 4 provoque de l'interférence entre les impulsions successives. Il est donc difficile de les reconnaître et de mesurer leurs niveaux.

Le récepteur analogique 15 de l'invention qui est illustré dans la partie supérieure de la Figure 4, se compose de deux parties principales: un filtre linéaire numérique adaptatif 17 qui "égalise" le signal, transformant l'impulsion distordue provenant du réseau à travers un filtre 18 et un convertisseur analogique/numérique 19, en une impulsion bien contrôlée qui n'introduit de l'interférence qu'entre des niveaux pairs (ou impairs) successifs. Par exemple, la sortie $Y_n$ du filtre d'égalisation 17 au temps n est donnée par l'une des expressions:

$$Y_n = X_n - X_{n-2} \text{ (classe IV)}$$

OU:

$$Y_n = X_n - X_{n-1} - X_{n-2} + X_{n-3}$$

OU:

$$Y_n = X_n - 2X_{n-2} + X_{n-4}$$

ou par une expression similaire déterminée de manière adaptative.

où les $X_n$ sont les niveaux envoyés par l'adaptateur numérique 5.

Ce système d'égalisation est connu en soi comme une "réponse partielle de classe IV". L'invention permet d'appliquer une telle réponse à une situation de communication directe entre un adaptateur numérique 5 et un adaptateur analogique 6.

Pour éviter la propagation d'erreur au récepteur, l'utilisation d'un codage différentiel en 14 est recommandée, comme bien connu en soi.

Par ailleurs, si le filtre linéaire d'égalisation 17 doit être adaptatif, son choix est à la portée de l'homme du métier.

A ce point, il reste à éliminer l'interférence entre symboles qui est exprimée par la relation $Y_n = X_n - X_{n-2}$. A cet effet, deux techniques connues sont utilisables: l'égalisation à retour de décision (DFE) et l'algorithme de Viterbi, représentées par le bloc fonctionnel 20.

Les niveaux $X_n$ produits par le central téléphonique 4 ne sont pas toujours égaux à leurs niveaux nominaux prévus par la loi de quantification. Le récepteur analogique 15 doit donc estimer la valeur réelle des $X_n$, et ces valeurs réelles doivent être utilisées dans l'égaliseur à retour de décision, ou l'égaliseur de Viterbi 20. L'estimation peut être faite en utilisant une des variations de l'algorithme des moindres carrés, implémenté dans un bloc fonctionnel 21.

Il est à noter que les valeurs réelles des $X_n$ doivent aussi être utilisées dans un annuleur d'écho 22 de l'adaptateur numérique (figure 3). A cet effet, l'adaptateur numérique 5 peut lui aussi procéder à une estimation des valeurs réelles à l'aide d'un bloc fonctionnel similaire au bloc 21 de la figure 4, ou bien utiliser des informations de contrôle correspondantes transmises par l'adaptateur analogique 6. Les liaisons correspondantes ne sont pas représentées dans les figures par simplicité.

Dans l'autre direction de transmission de données, c'est-à-dire de l'adaptateur analogique 6 vers l'adaptateur numérique 5, le transmetteur 16 de l'adaptateur analogique illustré au bas de la Figure 4 utilise l'horloge 23 du terminal 6, qu'il a récupérée dans sa section réceptrice 15. Le but de la partie de transmission 16 de l'adaptateur analogique 6 est de produire un signal analogique qui, lors de son échantillonnage, vaudrait en l'absence de bruit et d'écho une valeur aisément prévisible, qui est fonction de l'information numérique transmise par l'adaptateur numérique 5.

Les brevets ATT EP - 0 669 740 et EURECOM FR 9512672 prévoient que valeurs de tension aux instants d'échantillonnage soient égales à un des niveaux nominaux de la loi de quantification, avec les inconvénients qui en découlent tel qu'expliqué plus haut. Cependant, selon la présente invention, cette limitation n'est pas utile. En effet, l'écho du signal produit par l'adaptateur numérique s'ajoute au signal produit par l'adaptateur analogique, et le décale d'une manière imprévisible mais connue de l'adaptateur numérique, comme décrit plus haut. En présence d'écho, la valeur du signal au moment de l'échantillonnage pourrait tomber entre deux niveaux de quantification, de sorte que le bruit la pousserait aisément d'un côté ou de l'autre.

Ce sera le rôle du récepteur de l'adaptateur numérique de retrouver l'information à partir du signal quantifié, et il vaut mieux dans ce cas choisir des valeurs permettant de simplifier la tâche du récepteur, par exemple en espaçant les valeurs de manière différente de ce qui serait permis par les niveaux de la loi de quantification.

Par exemple, il pourrait être souhaité d'envoyer des niveaux séparés de 15 unités, situés entre -500 et +500 unités. Cela ne serait pas possible sous la loi A, dans laquelle les niveaux entre -30 et +30 sont séparés de 2 unités, ceux entre 33 et 93 par 4 unités, ceux entre 99 et 219 par 8 unités, etc.

L'invention prévoit que la réponse impulsionnelle entre l'adaptateur analogique 6 et la centrale 4 soit mesurée par l'adaptateur numérique 5, et communiquée à l'adaptateur analogique 6 par des messages de contrôle. Sur la base de ces mesures, l'adaptateur analogique 6 synthétise un filtre numérique 24 pour que la réponse totale (ligne 8 + filtres) soit à nouveau une réponse partielle, par exemple une réponse de classe IV, notamment modifiée pour fournir davantage d'atténuation près de 0 Hz, dans la bande de 0 à 60 Hz, ou près de 4000 Hz. Cette atténuation pourrait également être déterminée de manière adaptative. Cette technique est appelée une "prédistortion". Le filtre 24 a aussi un rôle accessoire, celui de produire un signal à un rythme de 16 kHz, notamment à partir d'une entrée à 8 kHz provenant de l'adaptateur analogique 6, pour faciliter la conception du filtre analogique 25 qui suit le convertisseur N/A 26, qui produit un signal analogique à partir d'un signal numérique.

Grâce à l'utilisation du filtre de prédistorsion 24, une équation du type $Y_n = X_n - X_{n-2}$ (ou une autre) est de nouveau applicable, où $Y_n$ désigne cette fois le signal à la centrale 4 et $X_n$ le niveau de sortie du transmetteur analogique 16. Il est nécessaire que $Y_n$ corresponde à un des niveaux de la loi de quantification $S_j$ pour réduire l'influence du bruit. Par conséquent, la relation suivante doit être vérifiée:

$$X_n = X_{n-2} + S_j$$

Si on ne prend pas de précautions, suivre cette relation peut conduire à de trop grandes valeurs pour $X_n$. De nombreuses techniques, connues sous le nom de « codage de ligne » sont disponibles pour résoudre ce problème, par exemple sous la forme d'un codeur de ligne 27, notamment la méthode connue de Tomlinson-Harashima. A ce point, l'homme de métier pourra facilement en choisir une en particulier.

Nous avons vu ci-dessus que la présence de l'écho peut rendre le signal très sensible au bruit. Il est donc indispensable d'utiliser un système correcteur d'erreur, typiquement un code de modulation en treillis. L'usage de code convolutionnel ou de code en bloc peut aussi être envisagé.

A la centrale 4, le signal $Y_n$ (le cas échéant corrompu par du bruit et de l'écho) est quantifié et encodé en un octet qui est transmis à la partie réceptrice 12 de l'adaptateur numérique 5, illustrée au bas de la Figure 3. Là, les octets sont transformés en niveaux linéaires par le bloc de conversion linéaire 28 (utilisant par exemple la loi de conversion A). Le signal résultant, de même que l'estimée de l'écho du signal émis par le transmetteur numérique 11, est alors traité dans le bloc fonctionnel décodeur 30. Le but de ce bloc est d'estimer l'information transmise par l'adaptateur analogique.

Le signal linéaire est la quantification de la somme des signaux représentant l'information numérique transmise par l'adaptateur analogique, l'écho du signal transmis par l'adaptateur numérique, et le bruit. La présence de la quantification empêche la suppression de l'écho par soustraction, comme dans les annulateurs d'écho classiques.

Au contraire de la méthode classique consistant à éliminer l'écho par soustraction, suivie d'un décodage du signal utile, il faut maintenant traiter de manière conjointe les problèmes de compensation de l'écho et de la détection du signal transmis par l'adaptateur analogique.

Dans le cas de la modulation codée en treillis, ce bloc fonctionnel 30 peut prendre la forme d'un algorithme de Viterbi pour trouver le chemin le plus vraisemblable dans un diagramme en treillis. Les poids affectés aux branches dans ce diagramme sont les rapports de vraisemblance des signaux quantifiés observés, étant données la valeur estimée de l'écho et l'hypothèse correspondant à la branche en question.

La sortie du bloc 30 est transmise, éventuellement à travers un tampon 31, à l'utilisateur de l'adaptateur numérique 5.

Comme représenté en figure 3, le signal d'erreur (différence entre le signal reçu et le signal idéal) dans le bloc 30 de l'algorithme de Viterbi est utilisé pour adapter l'annuleur ou filtre d'écho 22, et pour estimer l'erreur due à une mauvaise synthèse du filtre de prédistortion 24 dans l'adaptateur analogique 6. L'information de correction (encodée en un bas débit) est multiplexée dans le sélecteur de niveaux 14 avec l'information en provenance de l'utilisateur connecté à l'entrée de l'adaptateur numérique 5 (canal de service), et transmise à l'adaptateur analogique 6. Elle est utilisée dans l'adaptateur analogique pour adapter le filtre de prédistortion 24.

L'adaptateur analogique doit aussi éliminer son propre écho. Les techniques à cet effet sont bien connues et une implémentation apparaît dans la Figure 4, sous la forme d'un filtre d'écho 22.

Comme représenté en figure 4, le signal d'erreur dans le bloc 20 correspondant à l'algorithme de Viterbi ou du système à retour de décision est utilisé par les algorithmes d'adaptation 34 pour ajuster le filtre d'écho 22', l'égaliseur linéaire adaptatif 17 et l'horloge locale 23.

Il est évident que comme dans les communications modems classiques, des séquences de reconnaissance et d'apprentissages doivent être échangées lorsque la communication est établie. Elles servent à initialiser les horloges et les filtres adaptatifs. On doit aussi prévoir que l'une ou l'autre des centrales téléphoniques 3,4 peut utiliser soit la loi A soit la loi $\mu$, et s'adapter on conséquence.

Il résulte de ce qui précède que l'invention atteint ses objectifs, et permet de relier une ligne numérique à une ligne analogique pour envoyer directement et de façon économique de l'information numérique, sans avoir à émuler un signal analogique. Ceci permet de réaliser des transmissions à un débit sensiblement égal à celui d'une ligne numérique à relativement haut débit, tout en utilisant pour la transmission une ligne de téléphone normale.

**Revendications**

1.   Dispositif de communication entre un adaptateur numérique (5) relié à un central (3) par l'intermédiaire d'une interface numérique (7), notamment de type RNIS, et un adaptateur analogique (6) relié à un central (4) par l'intermédiaire d'une interface analogique (8), lesdits centraux (3,4) étant relies par l'intermédiaire d'un réseau de télécommunications (2); **caractérisé en ce qu'**il comporte des moyens (11,12,15,16) de liaison directe entre l'adaptateur numérique (5) et l'adaptateur analogique (6), l'information numérique de l'adaptateur numérique (5) étant envoyée à l'adaptateur analogique (6) directement sous forme numérique sans émuler un signal analogique, et l'information analogique de l'adaptateur analogique (6) étant envoyée a l'adaptateur numérique (5) sous forme analogique; et **en ce que** lesdits moyens (11,12,15,16) de liaison directe comportent, dans le sens de transmission allant de l'adaptateur analogique (6) vers l'adaptateur numérique (5), un transmetteur analogique (16) situé dans l'adaptateur analogique (6) et apte à transmettre à un récepteur numérique (12) situé dans l'adaptateur numérique (5), un signal analogique tel que lors de son échantillonnage par l'interface analogique du central (4), vaudra la somme d'une valeur apte à être déterminée par l'information numérique transmise par l'adaptateur analogique (6) à l'adaptateur numerique (5), et de l'écho du signal émis par l'adaptateur numérique (5), sans que ladite valeur doive etre égale à un niveau de la loi de quantification.

2.   Dispositif de communication selon la revendication 1, **caractérisé en ce que** lesdits moyens (11,12; 15,16) de liaison directe comportent, dans le sens de transmission allant de l'adaptateur numérique (5) vers l'adaptateur analogique (6), un transmetteur numérique (11) situé dans l'adaptateur numérique (5) et apte à transmettre à un récepteur analogique (15) situé dans l'adaptateur analogique (6), des impulsions analogiques dont les niveaux de tension représentent l'information transmise de l'adaptateur numérique (5) vers l'adaptateur analogique (6).

3.   Dispositif de communication selon la revendication 1 ou 2, **caractérisé en ce que** le récepteur de l'adaptateur analogique (6) comporte un égaliseur linéaire adaptatif (17) connecté en entrée à la sortie d'un convertisseur analogique/numérique (19), et connecté en sortie à l'entrée d'un égaliseur de sortie (20) relié à l'équipement de l'utilisateur, de sorte que la réponse en sortie de l'égaliseur linéaire adaptatif (17) est une réponse partielle, par exemple de classe IV.

4.   Dispositif de communication selon la revendication 3, **caractérisé en ce** ladite réponse partielle est déterminée de façon adaptative.

5.   Dispositif de communication selon la revendication 3 ou 4, **caractérisé en ce que** ledit égaliseur de sortie (20) est un égaliseur à retour de décision, ou un égaliseur de Viterbi.

6.   Dispositif de communication selon la revendication 1 ou 2, **caractérisé en ce que** lesdits moyens (11,12) comportent, du côté de l'adaptateur numérique (5), un sélecteur (14) de n niveaux, n étant notamment égal à 64, représentés sous la forme d'un octet, parmi N = 256 niveaux de quantification possibles, ledit sélecteur de niveaux (14) étant connecté en entrée à l'équipement de l'utilisateur et en sortie à une interface numérique.

7.   Dispositif de communication selon la revendication 2, **caractérisé en ce que** le transmetteur (16) de l'adaptateur analogique (6) comporte un codeur de ligne (27) suivi d'un filtre de prédistortion (24) qui synthétise une réponse partielle, par exemple de classe IV.

8.   Dispositif de communication selon la revendication 7, **caractérisé en ce que** ladite réponse partielle est déterminée de façon adaptative.

9.   Dispositif de communication selon la revendication 1, **caractérisé en ce que** l'adaptateur numérique (5) comporte un décodeur (30) connecté en entrée à un filtre d'écho (22) et à la sortie de l'interface numérique de l'adaptateur numérique (5), ledit décodeur (30) délivrant en sortie à l'équipement de l'utilisateur (9) la séquence la plus vraisemblable de groupes de bits transmis par l'adaptateur analogique (6), étant donné l'écho du signal produit par l'adaptateur numérique (5).

10.   Procédé de transmission d'un adaptateur analogique (6) vers un adaptateur numérique (5) dans un système de communication, **caractérisé en ce qu'**il comporte les étapes consistant à:

-   prendre un groupe de bits provenant d'une source de données (6) connectée au système de communication;
-   sélectionner un signal analogique ayant une amplitude correspondant à la valeur numérique du groupe de bits, les signaux correspondant à des groupes successifs interférant les uns avec les autres et ayant une forme telle qu'au moment où le signal analogique est échantillonné dans l'interface analogique (8) de la centrale (4), sa valeur soit sensiblement égale à la somme d'une valeur apte à être déterminée par l'information numérique transmise par l'adaptateur analogique (6) à l'adaptateur numérique (5), et de l'écho du signal émis par l'adaptateur numérique(5), sans que ladite valeur doive être égale à un niveau de la loi de quantification, de sorte que suite à l'échantillonnage du signal analogique, un octet apparaisse dans l'adaptateur numérique (5), représentant ladite somme;

- traiter les octets successifs pour retrouver la séquence la plus vraisemblable des groupes de bits, étant donné l'écho du signal transmis par l'adaptateur numérique;

- transmettre la valeur numérique des groupes de bits retrouvés à l'équipement de l'utilisateur.

**Patentansprüche**

1. Vorrichtung zur Nachrichtenübertragung zwischen einem Digitaladapter (5), der über eine digitale Schnittstelle (7), insbesondere vom ISDN Typ, mit einer Vermittlungsstelle (3) verbunden ist und einem Analogadapter (6) der über eine Analogschnittstelle (8) mit einer Vermittlungsstelle (4) verbunden ist und wobei die Vermittlungsstellen (3, 4) über eine Schnittstelle mit einem Telekommunikationsnetz (2) miteinander verbunden sind, **dadurch gekennzeichnet, dass** die Vorrichtung zur Nachrichtenübertragung Mittel (11, 12, 15, 16) zur direkten Verbindung zwischen dem Digitaladapter (5) und dem Analogadapter (6) umfasst, wobei die digitale Information vom Digitaladapter (5) direkt zum Analogadapter (6) ohne Emulation eines Analogsignals in digitaler Form geschickt wird und wobei die analoge Information vom Analogadapter (6) zum Digitaladapter (5) in analoger Form geschickt wird, und dass die Mittel zur direkten Verbindung (11, 12, 15, 16) in der Übertragungsrichtung vom Analogadapter (6) zum Digitaladapter (5) einen Analogtransmitter (16) umfassen, der sich im Analogadapter (6) befindet und in der Lage ist, einem sich im Digitaladapter (5) befindlichen Digitalempfänger (12) so ein Analogsignal zu übermitteln, wie es während seinem Sampling durch die Analogschnittstelle der Vermittlungsstelle (4) der Summe aus einem Wert, der durch die vom Analogadapter (6) zum Digitaladapter (5) übermittelte digitale Information bestimmt werden kann, und dem Echo des vom Digitaladapter (5) ausgesandten Signals entspricht, ohne dass dieser Wert gleich einem Niveau des Kodierungsgesetzes sein muß.

2. Vorrichtung zur Nachrichtenübertragung nach Anspruch 1, **dadurch gekennzeichnet, dass** die Mittel zur direkten Verbindung (11, 12, 15, 16) in der Übertragungsrichtung vom Digitaladapter (5) zum Analogadapter (6) einen Digitaltransmitter (11) umfassen, der sich im Digitaladapter (5) befindet und in der Lage ist, an einen Analogempfänger (15), der sich im Analogadapter (6) befindet, analoge Impulssignale zu übermitteln, deren Spannungspegel die vom Digitaladapter (5) zum Analogadapter (6) übermittelte Information darstellen.

3. Vorrichtung zur Nachrichtenübertragung nach Anspruch 1 oder 2, **dadurch gekennzeichnet, dass** der Empfänger des Analogadapters (6) einen adaptiven Linearentzerrer (17) umfasst, der mit dem Eingang/Ausgang eines Analog/Digitalwandlers (19) verbunden ist, und mit dem Ausgang/Eingang eines Ausgangsentzerrers (20) der mit der Benutzervorrichtung verbunden ist, und zwar so, dass die Antwort am Ausgang des adaptiven Linearentzerrers (17) eine Partial-Response, beispielsweise der Klasse IV ist.

4. Vorrichtung zur Nachrichtenübertragung nach Anspruch 3, **dadurch gekennzeichnet, dass** die Partial-Response auf adaptive Weise bestimmt wird.

5. Vorrichtung zur Nachrichtenübertragung nach Anspruch 3 oder 4, **dadurch gekennzeichnet, dass** der Ausgangsentzerrer (20) ein Rückkopplungsentzerrer ist oder ein Viterbi-Entzerrer.

6. Vorrichtung zur Nachrichtenübertragung nach Anspruch 1 oder 2, **dadurch gekennzeichnet, dass** die Mittel (11, 12) zum Digitaladapter (5) benachbart eine Auswahlvorrichtung (14) mit n Pegeln umfassen, wobei n gleich 64 ist und in Form eines Bytes dargestellt ist aus N = 246 möglichen Quantisierungspegeln, wobei die Pegel-Auswahlvorrichtung (14) mit dem Eingang der Vorrichtung des Benutzers und dem Ausgang einer Digitalschnittstelle verbunden ist.

7. Vorrichtung zur Nachrichtenübertragung nach Anspruch 2, **dadurch gekennzeichnet, dass** der Transmitter (16) des Analogadapters (6) einen Linienencodierer (27) umfasst gefolgt von einem Vorverzerrungsfilter (24), der eine Partial-Response, beispielsweise der Klasse IV erzeugt.

8. Vorrichtung zur Nachrichtenübertragung nach Anspruch 7, **dadurch gekennzeichnet, dass** die Partial-Response adaptiv bestimmt wird.

9. Vorrichtung zur Nachrichtenübertragung nach Anspruch 1, **dadurch gekennzeichnet, dass** der Digitaladapter (5) einen Decoder (30) umfasst, der am Eingang mit einem Echofilter (22) verbunden ist und am Ausgang mit der Digitalschnittstelle des Digitaladapters (5), wobei dieser Decoder (30) am Ausgang zur Vorrichtung des Benutzers (9) die wahrscheinlichste Sequenz der Gruppen von Bits, die vom Analogadapter (6)übertragen werden liefert, mit der Maßgabe, dass ein Signalecho vorliegt, dass vom Digitaladapter erzeugt wurde.

10. Übermittlungsverfahren von einem Analogadapter (6) zu einem Digitaladapter (5) in einem System zur Nachrichtenübertragung, **dadurch gekennzeichnet, dass** es die aus folgendem bestehenden Schritte umfasst:

   - dem Nehmen einer Gruppe von Bits, die aus einer mit dem System zur Nachrichtenübertragung verbundenen Datenquelle (6) stammen
   - der Wahl eines Analogsignals, das eine Amplitude aufweist, die einem digitalen Wert der Gruppe von Bits entspricht, wobei die Signale sukzessiven Gruppen entsprechen, die miteinander interferieren und so eine Form aufweisen, dass im Moment des Sampelns des Analogsignals in der Analogschnittstelle (8) der Verbindungsstelle (4), sein Wert im wesentlichen gleich der Summe aus einem Wert, der durch die vom Analogadapter (6) zum Digitaladapter (5) übermittelte digitale Information bestimmt werden kann, und dem Echo des vom Digitaladapter (5) gesendeten Signals entspricht, ohne dass dieser Wert gleich einem Niveau des Kodierungsgesetzes sein muss, derart, dass nach dem Sampeln des Analogsignals, ein Byte im Digitaladapter (5) erscheint, das diese Summe darstellt;
   - der Verarbeitung der sukzessiven Bytes zur Auffindung der wahrscheinlichsten Sequenz von Gruppen von Bits in Anbetracht des Echos des vom Digitaladapter übermittelten Signals;
   - der Übermittlung des digitalen Wertes der aufgefundenen Gruppen von Bits zur Benutzervorrichtung.

## Claims

1. Communication device between a digital adapter (5) connected to an exchange (3) by means of a digital interface (7), in particular of the ISDN type, and an analogue adapter (6) connected to an exchange (4) by means of an analogue interface (8), said exchanges (3, 4) being connected by means of a telecommunications network (2); **characterised in that** it contains direct connection means (11, 12, 15, 16) between the digital adapter (5) and the analogue adapter (6), the digital data of the digital adapter (5) being sent directly to the digital adapter (5) in analogue form without emulating an analogue signal, and the analogue data of the analogue adapter (6) being sent to the digital adapter (5) in analogue form; and **in that** said direct connection means (11, 12, 15, 16) have, in the direction of transmission from the analogue adapter (6) to the digital adapter (5), an analogue transmitter (16) located in the analogue adapter (6) and capable of transmitting to a digital receiver (12) located in the digital adapter (5), an analogue signal such that at the time of its sampling by the analogue interface of the exchange (4), it shall amount to the sum of a value capable of being determined by the digital data transmitted by the analogue adapter (6) to the digital adapter (5), and the echo of the signal transmitted by the digital adapter (5), without said value having to be equal to a level of the quantizing law.

2. Communication device according to Claim 1, **characterised in that** said direct connection means (11, 12; 15, 16) have, in the direction of transmission from the digital adapter (5) to the analogue adapter (6), a digital transmitter (11) located in the digital adapter (5) and capable of transmitting to an analogue receiver (15) located in the analogue adapter (6), analogue pulses whose voltage levels represent the information transmitted from the digital adapter (5) to the analogue adapter (6).

3. Communication device according to Claim 1 or 2, **characterised in that** the receiver of the analogue adapter (6) has an adaptive linear equalizer (17) whose input is connected to the output of an analogue/digital converter (19), and whose output is connected to the input of an output equalizer (20) connected to the user's equipment in such a way that the output response of the adaptive linear equalizer (17) is a partial response, for example of Class IV.

4. Communication device according to Claim 3, **characterised in that** said partial response is determined in an adaptive manner.

5. Communication device according to Claim 3 or 4, **characterised in that** said output equalizer (20) is a decision feedback equalizer, or a Viterbi equalizer.

6. Communication device according to Claim 1 or 2, **characterised in that** said means (11, 12) have, at the digital adapter (5) end, a selector (14) with n levels, n being in particular equal to 64, represented in the form of a byte, of which N = 256 possible quantizing levels, said level selector (14) being connected via its input to the user's equipment and via its output to a digital interface.

7. Communication device according to Claim 2, **char-

**acterised in that** the transmitter (16) of the analogue adapter (6) has a line coder (27) followed by a predistortion filter (24), which synthesizes a partial response, for example of Class IV.

8. Communication device according to Claim 7, **characterised in that** said partial response is determined in an adaptive manner.

9. Communication device according to Claim 1, **characterised in that** the digital adapter (5) has a decoder (30) whose input is connected to an echo filter (22) and to the output of the digital interface of the digital adapter (5), said decoder (30) delivering, via its output, to the user's equipment (9) the most probable sequence of groups of bits transmitted by the analogue adapter (6), in view of the echo of the signal produced by the digital adapter (5).

10. Process for transmitting from an analogue adapter (6) to a digital adapter (5) in a communication system, **characterised in that** is has steps consisting of:

   - taking a group of bits emanating from a data source (6) connected to the communication system;
   - selecting an analogue signal having an amplitude corresponding to the digital value of the group of bits, the signals corresponding to successive groups that mutually interfere and having a form such that at the moment when the analogue signal is sampled in the analogue interface (8) of the exchange (4), its value is substantially equal to the sum of a value capable of being determined by the digital data transmitted by the analogue adapter (6) to the digital adapter (5), without said value having to be equal to a level of the quantizing law, so that, following the sampling of the analogue signal, a byte appears in the digital adapter (5), representing said sum;
   - processing the successive bytes in order to retrieve the most probable sequence of the groups of bits, in view of the echo of the signal transmitted by the digital adapter;
   - transmitting the digital value of the groups of bits retrieved from the user's equipment.

FIG. 1

FIG. 2

FIG. 3

Adaptateur numérique (5)

EP 0 857 386 B1

FIG. 4

Adaptateur analogique (6)